# FASCICULE DE BREVET EUROPEEN

(11) **EP 2 933 586 B1**
(45) Date de publication et mention de la délivrance du brevet: **19.09.2018**
(21) Numéro de dépôt: 15157603.0
(22) Date de dépôt: 04.03.2015
(51) Int. Cl.: F25B 25/00, F25B 5/04, F25B 6/04, B60H 1/00, F25B 40/02

(54) **Un dispositif de conditionnement thermique d'un espace**
Eine Vorrichtung zur thermischen Konditionierung eines Raumes
A thermal conditioning device of a space

(30) Priorité: 16.04.2014 FR 1453405
(43) Date de publication de la demande: 21.10.2015
(73) Titulaire: VALEO SYSTEMES THERMIQUES, 78320 Le Mesnil Saint-Denis (FR)
(72) Inventeur: Yahia, Mohamed, 75005 Paris (FR)
(74) Mandataire: Metz, Gaëlle

(56) Documents cités:
- WO-A1-2013/084463
- DE-A1-102007 016 298
- FR-A1- 2 963 665
- FR-A1- 2 967 759
- US-A1- 2004 134 217

## Description

La présente invention concerne un dispositif de conditionnement thermique d'un espace. La présente invention concerne plus particulièrement, mais non exclusivement, le conditionnement thermique d'un habitacle de véhicule automobile.

Un tel dispositif de conditionnement thermique peut par exemple assurer les fonctions suivantes :
- chauffage d'un flux d'air,
- refroidissement ou climatisation du flux d'air,
- déshumidification du flux d'air.

Il existe un besoin d'améliorer le rendement d'un tel circuit de fluide frigorigène, en particulier lorsqu'il est destiné à assurer la fonction de chauffage d'un flux d'air. Le document DE102007016298 A1 divulgue un dispositif de conditionnement thermique selon le préambule de la revendication 1.

L'invention a notamment pour but d'apporter une solution simple, efficace et économique à ce problème.

A cet effet, elle propose un dispositif de conditionnement thermique d'un espace selon la revendication 1.

Le circuit peut être conçu de manière à ce que, dans le premier mode de fonctionnement, le fluide frigorigène issu du premier échangeur de chaleur traverse le premier détendeur avant de traverser le deuxième échangeur de chaleur.

Par ailleurs, le fluide frigorigène peut être apte à circuler selon :
- un deuxième mode de fonctionnement dans lequel le fluide frigorigène circule selon une deuxième boucle traversant au moins successivement le compresseur, le premier échangeur de chaleur, le premier détendeur, le deuxième échangeur de chaleur formant alors un évaporateur et le troisième échangeur de chaleur avant de traverser à nouveau le compresseur, et/ou
- un troisième mode de fonctionnement dans lequel le fluide frigorigène circule selon une première boucle traversant au moins successivement le compresseur, le premier échangeur de chaleur, le premier détendeur, et le deuxième échangeur de chaleur formant alors un évaporateur avant de traverser à nouveau le compresseur.

Le circuit peut être conçu de manière à ce que, dans le deuxième mode de fonctionnement, le fluide frigorigène issu du deuxième échangeur de chaleur traverse le deuxième détendeur avant de traverser le troisième échangeur de chaleur.

Le premier échangeur de chaleur est configuré pour échanger de la chaleur entre le fluide frigorigène et le fluide caloporteur d'un circuit de fluide caloporteur. Le circuit de fluide caloporteur comporte un premier radiateur configuré pour échanger de la chaleur entre ledit fluide caloporteur et de l'air extérieur à un véhicule et un second radiateur apte à échanger de chaleur entre ledit fluide caloporteur et un flux d'air destiné à déboucher dans un habitacle du véhicule, le circuit de fluide caloporteur comportant en outre des moyens de redirection du fluide caloporteur aptes à diriger le fluide caloporteur vers le premier radiateur et/ou vers le second radiateur.

Le deuxième échangeur de chaleur est configuré pour échanger de la chaleur entre le fluide frigorigène et le flux d'air destiné à déboucher dans l'habitacle. Le troisième échangeur de chaleur est configuré pour échanger de la chaleur entre le fluide frigorigène et de l'air extérieur au véhicule.

Dans une telle configuration et dans le premier mode de fonctionnement, appelé mode de chauffage de l'habitacle, des calories peuvent être prélevées sur l'air extérieur, à l'aide du troisième échangeur de chaleur, lesdites calories étant transférées ensuite au flux d'air destiné à l'habitacle (chauffage de l'habitacle), à la fois directement par le deuxième échangeur de chaleur et indirectement à l'aide du premier échangeur de chaleur, du fluide caloporteur et du second radiateur. Dans ce mode de fonctionnement, il est donc possible d'augmenter la quantité de chaleur apportée au flux d'air destiné à l'habitacle et/ou de réduire la consommation du compresseur qui ne doit fournir qu'un travail réduit afin d'atteindre une valeur de consigne en ce qui concerne la température de l'habitacle.

On notera également que, dans ce mode de fonctionnement, la quantité de chaleur transmise indirectement (par l'intermédiaire du circuit de fluide caloporteur) au flux d'air destiné à déboucher dans l'habitacle est relativement faible, ce qui permet d'améliorer le rendement du dispositif. En effet, la transmission de chaleur de façon indirecte a un rendement plus faible qu'une transmission de chaleur directe.

Un tel mode de fonctionnement peut être utilisé en particulier dans le cas où la température de l'air extérieur au véhicule est relativement faible, par exemple négative.

Dans le deuxième mode de fonctionnement, appelé mode de déshumidification, des calories peuvent être prélevées sur l'air extérieur, à l'aide du troisième échangeur de chaleur, des calories étant également prélevées sur le flux d'air destiné à l'habitacle, à l'aide du deuxième échangeur de chaleur, de façon à condenser l'humidité contenue dans le flux d'air destiné à l'habitacle (déshumidification). Les calories ainsi prélevées peuvent ensuite être transférées au fluide caloporteur par l'intermédiaire du premier échangeur de chaleur, puis au flux d'air destiné à l'habitacle (préalablement déshumidifié par le deuxième échangeur de chaleur), à l'aide du second radiateur.

Un tel mode de fonctionnement peut être utilisé en particulier dans le cas où la température de l'air extérieur au véhicule est positive, par exemple comprise entre 3 et 15 °C.

Dans le troisième mode de fonctionnement également appelé mode de climatisation de l'habitacle, des calories peuvent être prélevées sur le flux d'air destiné à l'habitacle (refroidissement ou climatisation de l'air destiné à l'habitacle) à l'aide du deuxième échangeur de chaleur, lesdites calories étant transférées au fluide caloporteur par l'intermédiaire du premier échangeur de chaleur. Ces calories sont ensuite évacuées dans l'air extérieur, par l'intermédiaire du premier radiateur.

On notera que l'architecture proposée par l'invention permet d'améliorer le rendement du circuit de fluide frigorigène, en particulier pour le premier mode de fonctionnement, sans ajout d'échangeur de chaleur, de détendeur ou de vanne.

Selon une caractéristique possible de l'invention, le circuit comporte un accumulateur situé en amont du compresseur.

Les moyens de redirection du flux de fluide frigorigène peuvent comporter un clapet anti-retour situé en aval du troisième échangeur de chaleur.

Par ailleurs, le dispositif peut comporter :
- une première portion formant une boucle s'étendant de la sortie du compresseur à l'entrée du compresseur et comportant successivement le premier échangeur de chaleur, le premier détendeur, le deuxième échangeur de chaleur, un premier embranchement et un second embranchement,
- une seconde portion s'étendant du premier embranchement au second embranchement et comportant successivement, du premier embranchement vers le second embranchement, le second détendeur et le troisième échangeur de chaleur,
- les moyens de redirection du flux de fluide frigorigène étant aptes à autoriser le passage de fluide frigorigène dans la première portion, entre les premier et second embranchements, tout en interdisant le passage de fluide frigorigène dans la seconde portion, ou aptes à autoriser le passage de fluide frigorigène dans la seconde portion tout en interdisant le passage de fluide frigorigène dans la première portion, entre les premier et second embranchements.

Dans ce cas, la première portion peut comporter une première vanne d'arrêt située entre les premier et second embranchements, la seconde portion comportant une seconde vanne d'arrêt située entre le premier embranchement et le deuxième détendeur, la première vanne d'arrêt et la seconde vanne d'arrêt appartenant aux moyens de redirection du flux de fluide frigorigène.

En variante, les deux vannes d'arrêts peuvent être remplacées par une vanne à trois voies située au niveau du premier embranchement.

La seconde portion peut comporter un clapet anti-retour situé entre le troisième échangeur de chaleur et le deuxième embranchement, le clapet anti-retour appartenant aux moyens de redirection du flux de fluide frigorigène.

Par ailleurs, le premier détendeur et/ou le second détendeur ont une ouverture ou une perte de charge variable, l'ouverture et/ou la perte de charge du premier détendeur et/ou du second détendeur étant commandées.

Ainsi, dans le premier mode de fonctionnement, le premier détendeur peut être complètement ouvert et avoir une perte de charge nulle. Dans le deuxième mode de fonctionnement, le deuxième détendeur peut être complètement ouvert et avoir une perte de charge nulle. Dans chacun de ces différents modes de fonctionnement, il est également possible de contourner le détendeur concerné, par exemple par l'intermédiaire d'une portion de contournement.

De plus, le premier échangeur de chaleur peut être apte à échanger de chaleur avec un fluide caloporteur d'un circuit de fluide caloporteur.

L'invention concerne un dispositif de conditionnement thermique d'un espace, comportant un circuit de fluide frigorigène du type précité, le premier échangeur de chaleur étant configuré pour échanger de la chaleur entre le fluide frigorigène et le fluide caloporteur du circuit de fluide caloporteur, ledit circuit de fluide caloporteur comportant un premier radiateur configuré pour échanger de la chaleur entre ledit fluide caloporteur et de l'air extérieur audit espace et un second radiateur configuré pour échanger de la chaleur entre ledit fluide caloporteur et un flux d'air destiné à déboucher dans ledit espace, le circuit de fluide caloporteur comportant en outre des moyens de redirection du fluide caloporteur aptes à diriger le fluide caloporteur vers le premier radiateur et/ou vers le second radiateur, le deuxième échangeur de chaleur étant apte à échanger de la chaleur entre le fluide frigorigène et le flux d'air destiné à déboucher dans ledit espace, le troisième échangeur de chaleur étant configuré pour échanger de la chaleur entre le fluide frigorigène et de l'air extérieur audit espace.

Selon une caractéristique de l'invention, les moyens de redirection du circuit de fluide caloporteur peuvent être conçus pour diriger le fluide caloporteur vers le premier radiateur dans le premier mode de fonctionnement et pour diriger le fluide caloporteur vers le second radiateur dans le deuxième mode de fonctionnement et dans le troisième mode de fonctionnement.

L'invention concerne également un véhicule automobile comportant un dispositif de conditionnement thermique du type précité, ledit espace étant un habitacle du véhicule automobile.

L'invention concerne enfin un procédé de fonctionnement d'un circuit de fluide frigorigène comprenant un premier échangeur de chaleur formant un condenseur, un deuxième échangeur de chaleur formant un condenseur ou un évaporateur, un troisième échangeur de chaleur formant un évaporateur, un compresseur, un premier détendeur, un second détendeur et des moyens de redirection du flux de fluide frigorigène, caractérisé en ce qu'il comporte au moins une étape de redirection du flux de fluide frigorigène conformément à l'un des modes de fonctionnement suivants :
- un premier mode de fonctionnement dans lequel le fluide frigorigène circule selon une première boucle traversant au moins successivement le compresseur, le premier échangeur de chaleur, le deuxième échangeur de chaleur formant alors un condenseur, le deuxième détendeur, et le troisième échangeur de chaleur avant de traverser à nouveau le compresseur,
- un deuxième mode de fonctionnement dans lequel le fluide frigorigène circule selon une deuxième boucle traversant au moins successivement le compresseur, le premier échangeur de chaleur, le premier détendeur, le deuxième échangeur de chaleur formant alors un évaporateur et le troisième échangeur de chaleur avant de traverser à nouveau le compresseur,
- un troisième mode de fonctionnement dans lequel le fluide frigorigène circule selon une première boucle traversant au moins successivement le compresseur, le premier échangeur de chaleur, le premier détendeur, et le deuxième échangeur de chaleur formant alors un évaporateur avant de traverser à nouveau le compresseur.

L'invention sera mieux comprise et d'autres détails, caractéristiques et avantages de l'invention apparaîtront à la lecture de la description suivante faite à titre d'exemple non limitatif en référence aux dessins annexés dans lesquels :
- la figure 1 est une vue schématique illustrant un dispositif de conditionnement thermique selon l'invention,
- la figure 2 est une vue schématique illustrant un premier mode de fonctionnement du dispositif de la figure 1,
- la figure 3 est un diagramme de Mollier illustrant le mode de fonctionnement de la figure 2,
- la figure 4 est une vue schématique illustrant une variante du premier mode de fonctionnement du dispositif de la figure 1,
- la figure 5 est un diagramme de Mollier illustrant le mode de fonctionnement de la figure 4,
- la figure 6 est une vue schématique illustrant un deuxième mode de fonctionnement du dispositif de la figure 1,
- la figure 7 est un diagramme de Mollier illustrant le mode de fonctionnement de la figure 6,
- la figure 8 est une vue schématique illustrant un troisième mode de fonctionnement du dispositif de la figure 1,
- la figure 9 est un diagramme de Mollier illustrant le mode de fonctionnement de la figure 8.

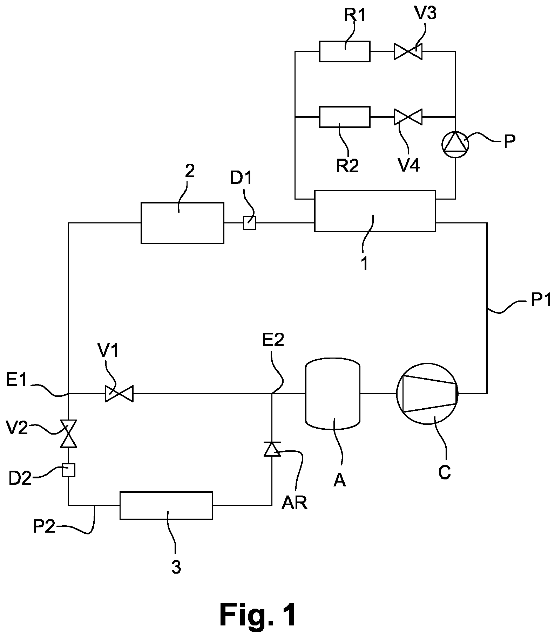

La figure 1 illustre un dispositif de conditionnement thermique d'un habitacle d'un véhicule automobile. Celui-ci comporte un circuit de fluide frigorigène comprenant un premier échangeur de chaleur 1 formant un condenseur, un deuxième échangeur de chaleur 2 formant un condenseur ou évaporateur (également appelé évapo-condenseur), un troisième échangeur de chaleur 3 formant un évaporateur, un compresseur C, un premier détendeur D1, un second détendeur D2, une première vanne d'arrêt V1, une seconde vanne d'arrêt V2, un clapet anti-retour AR et un accumulateur A. Le premier détendeur D1 et le deuxième détendeur D2 sont à ouverture variable ou à perte de charge variable, ladite ouverture ou ladite perte de charge étant apte à être régulée par l'intermédiaire de moyens de commande non représentés.

Plus particulièrement, le circuit de fluide frigorigène comporte :
- une première portion P1 formant une boucle s'étendant de la sortie du compresseur C à l'entrée du compresseur C et comportant successivement le premier échangeur de chaleur 1, le premier détendeur D1, le deuxième échangeur de chaleur 2, un premier embranchement E1, la première vanne V1, un second embranchement E2, et l'accumulateur A,
- une seconde portion P2 s'étendant du premier embranchement E1 au second embranchement E2 et comportant successivement, du premier embranchement E1 vers le second embranchement E2, la seconde vanne V2, le second détendeur D2, le troisième échangeur de chaleur 3 et le clapet anti-retour AR.

Le premier échangeur de chaleur 1 est apte à échanger de la chaleur entre le fluide frigorigène et le fluide caloporteur d'un circuit de fluide caloporteur. Le circuit de fluide caloporteur comporte un premier radiateur R1 apte à échanger de la chaleur entre ledit fluide caloporteur et de l'air extérieur au véhicule et un second radiateur R2 apte à échanger de la chaleur entre ledit fluide caloporteur et un flux d'air destiné à déboucher dans l'habitacle du véhicule. Le circuit de fluide caloporteur comporte en outre une pompe P et des vannes V3, V4 aptes à diriger le fluide caloporteur vers le premier radiateur R1 et/ou vers le second radiateur R2. Bien entendu, la structure du circuit de fluide caloporteur n'est qu'un exemple de réalisation et il est possible d'utiliser d'autres structures équivalentes (utilisation d'une ou plusieurs vannes à trois voies, par exemple) afin d'assurer les mêmes fonctions.

Le deuxième échangeur de chaleur 2 est apte à échanger de la chaleur entre le fluide frigorigène et le flux d'air destiné à déboucher dans l'habitacle. Le troisième échangeur de chaleur 3 est apte à échanger de la chaleur entre le fluide frigorigène et de l'air extérieur au véhicule.

Le deuxième échangeur de chaleur 2 et le deuxième radiateur R2 sont par exemple disposés dans un canal de circulation d'air d'une installation de chauffage, ventilation et/ou climatisation, également appelée H.V.A.C. (Heating, Ventilation and Air-Conditioning, en anglais), ledit canal étant destiné à déboucher dans l'habitacle du véhicule. Le premier radiateur R1 et le troisième échangeur de chaleur 3 sont par exemple disposés en face avant du véhicule.

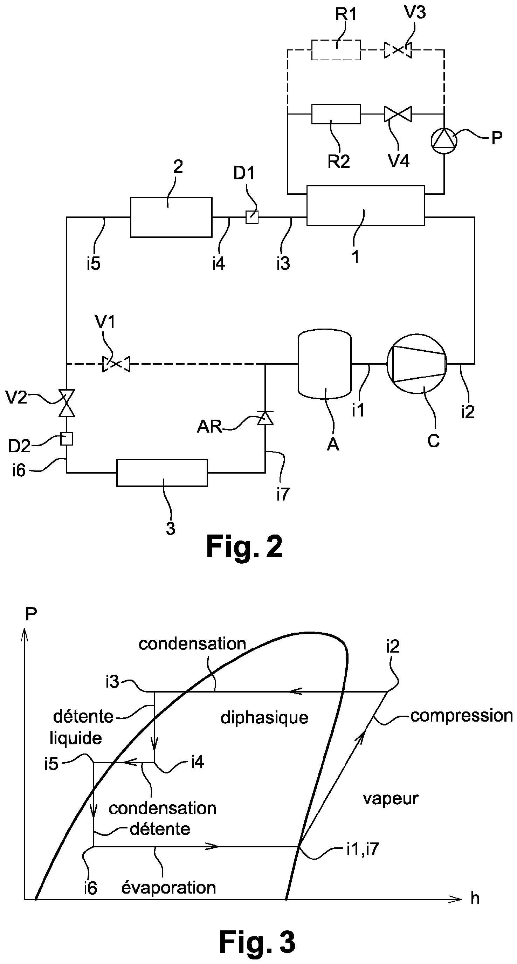

La figure 2 illustre un premier mode de fonctionnement du dispositif selon l'invention, dans lequel la première vanne V1 est fermée et dans lequel la seconde vanne V2 est ouverte. Ainsi, le fluide frigorigène circule selon une première boucle traversant au moins successivement le compresseur C, le premier échangeur de chaleur 1, le premier détendeur D1, le deuxième échangeur de chaleur 2 formant alors un condenseur, la deuxième vanne V2, le deuxième détendeur D2, le troisième échangeur de chaleur 3, le clapet anti-retour AR et l'accumulateur A avant de traverser à nouveau le compresseur C.

Dans ce mode de fonctionnement, le détendeur D1 et le détendeur D2 ne sont pas complètement ouverts et appliquent par conséquent une perte de charge.

Dans ce mode de fonctionnement également, le premier radiateur R1 est rendu inopérant par fermeture de la vanne V3. Le fluide caloporteur circule donc uniquement au travers du second radiateur R2.

Dans le premier mode de fonctionnement, appelé mode de chauffage de l'habitacle, des calories peuvent être prélevées sur l'air extérieur, à l'aide du troisième échangeur de chaleur 3, lesdites calories étant transférées ensuite au flux d'air destiné à l'habitacle (chauffage de l'habitacle), à la fois directement par le deuxième échangeur de chaleur 2 et indirectement à l'aide du premier échangeur de chaleur 1, du fluide caloporteur et du second radiateur R2. Dans ce mode de fonctionnement, il est donc possible d'augmenter la quantité de chaleur apportée au flux d'air destiné à l'habitacle et/ou de réduire la consommation du compresseur C qui ne doit fournir qu'un travail réduit afin d'atteindre une valeur de consigne en ce qui concerne la température de l'habitacle.

On notera également que, dans ce mode de fonctionnement, la quantité de chaleur transmise indirectement (par l'intermédiaire du circuit de fluide caloporteur) au flux d'air destiné à déboucher dans l'habitacle est faible, ce qui permet d'améliorer le rendement du dispositif. En effet, la transmission de chaleur de façon indirecte a un rendement plus faible qu'une transmission de chaleur directe.

Un tel mode de fonctionnement peut être utilisé en particulier dans le cas où la température de l'air extérieur au véhicule est relativement faible, par exemple négative.

Le cycle thermodynamique correspondant au premier mode de fonctionnement est illustré sur le diagramme de Mollier de la figure 3. Sur ce diagramme, des points référencés i1 à i7 ont été reportés à la fois sur le diagramme de Mollier et sur le circuit de fluide frigorigène illustré à la figure 2 afin de faciliter la compréhension. Les phases du fluide frigorigène (liquide ; diphasique, c'est-à-dire liquide et vapeur ; vapeur) sont également indiquées sur le diagramme, ainsi que les différentes étapes du cycle (évaporation, condensation, compression, détente).

On notera que le point i3 peut éventuellement être situé dans la zone correspondant à l'état diphasique, puisque le deuxième échangeur de chaleur 2 assure ensuite la condensation du fluide frigorigène. Il est alors possible de réduire la taille du second radiateur R2 sans affecter le bon fonctionnement du dispositif.

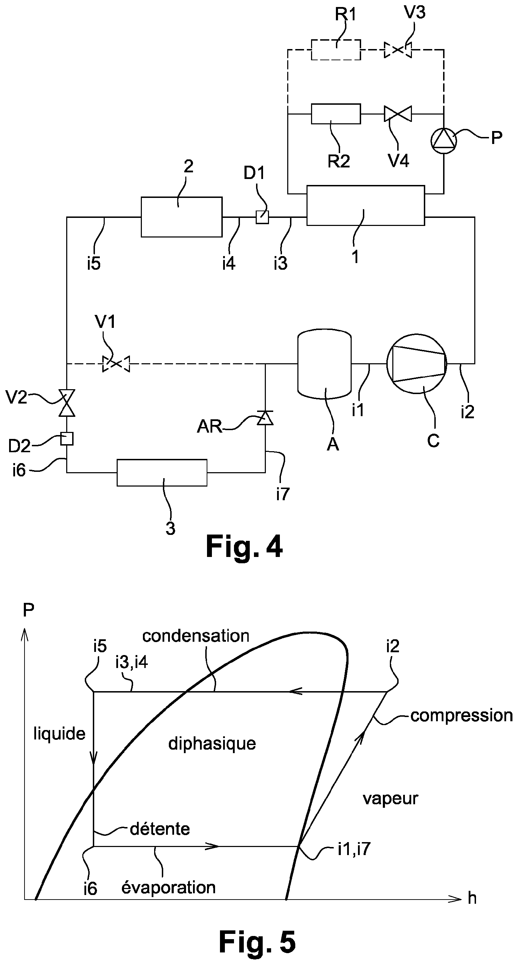

La figure 4 illustre une variante du premier mode de fonctionnement, qui diffère de celui décrit en référence aux figures 2 et 3 en ce que le premier détendeur D1 est complètement ouvert et n'applique, par conséquent, aucune perte de charge.

Comme précédemment, le cycle thermodynamique correspondant à cette variante du premier mode de fonctionnement est illustré sur le diagramme de Mollier de la figure 5. Sur ce diagramme, des points référencés i1 à i7 ont été reportés à la fois sur le diagramme de Mollier et sur le circuit de fluide frigorigène illustré à la figure 4 afin de faciliter la compréhension. On notera que les points i3 et i4 sont confondus sur le diagramme de Mollier, puisque le second détendeur D2 n'applique aucune perte de charge.

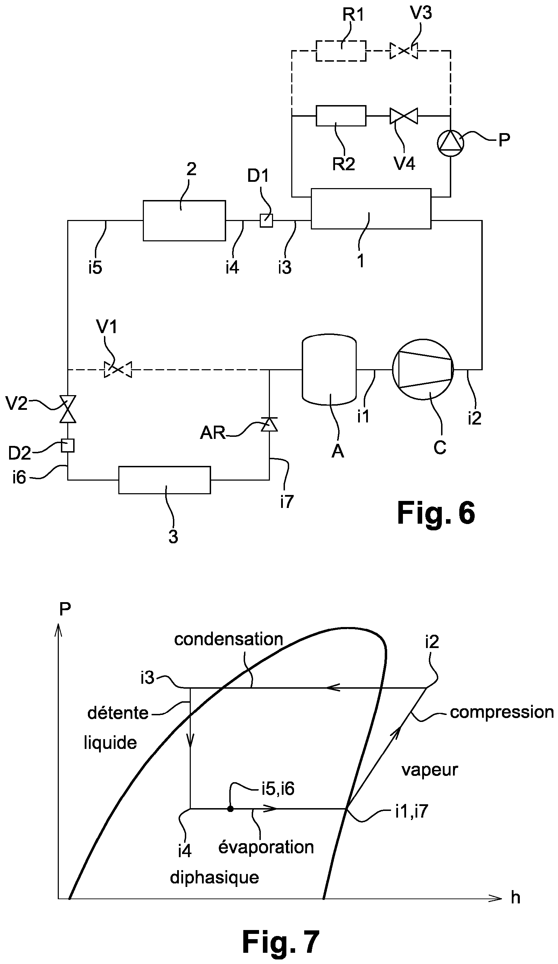

La figure 6 illustre un deuxième mode de fonctionnement dans lequel la vanne V1 est fermée et dans lequel la vanne V2 est ouverte. Ainsi, le fluide frigorigène circule selon une deuxième boucle traversant au moins successivement le compresseur C, le premier échangeur de chaleur 1, le premier détendeur D1, le deuxième échangeur de chaleur 2 formant alors un évaporateur, la deuxième vanne V2, le deuxième détendeur D2, le troisième échangeur de chaleur 3, le clapet anti-retour AR et l'accumulateur A avant de traverser à nouveau le compresseur C.

Dans ce mode de fonctionnement, le détendeur D1 applique une perte de charge, mais le détendeur D2 est complètement ouvert et n'applique par conséquent pas de perte de charge.

Dans ce mode de fonctionnement également, le premier radiateur R1 est rendu inopérant par fermeture de la vanne V3. Le fluide caloporteur circule donc uniquement au travers du second radiateur R2.

Dans le deuxième mode de fonctionnement, appelé mode de déshumidification, des calories peuvent être prélevées sur l'air extérieur, à l'aide du troisième échangeur de chaleur 3, des calories étant également prélevées sur le flux d'air destiné à l'habitacle, à l'aide du deuxième échangeur de chaleur 2, de façon à condenser l'humidité contenue dans le flux d'air destiné à l'habitacle (déshumidification). Les calories ainsi prélevées peuvent ensuite être transférées au fluide caloporteur par l'intermédiaire du premier échangeur de chaleur 1, puis au flux d'air destiné à l'habitacle (préalablement déshumidifié par le deuxième échangeur de chaleur 2), à l'aide du second radiateur R2.

Un tel mode de fonctionnement peut être utilisé en particulier dans le cas où la température de l'air extérieur au véhicule est positive, par exemple comprise entre 3 et 15 °C.

Comme précédemment, le cycle thermodynamique correspondant au deuxième mode de fonctionnement est illustré sur le diagramme de Mollier de la figure 7. Sur ce diagramme, des points référencés i1 à i7 ont été reportés à la fois sur le diagramme de Mollier et sur le circuit de fluide frigorigène illustré à la figure 6 afin de faciliter la compréhension.

On notera que les points i5 et i6 sont confondus sur le diagramme de Mollier, puisque le premier détendeur D1 n'applique aucune perte de charge.

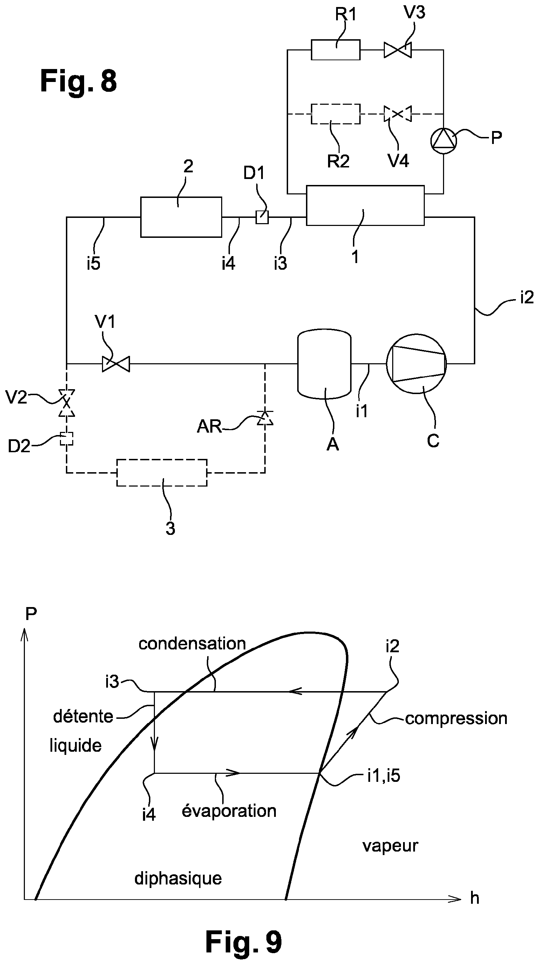

La figure 8 illustre un troisième mode de fonctionnement dans lequel la vanne V1 est ouverte et dans lequel la vanne V2 est fermée. Ainsi, le fluide frigorigène circule selon une première boucle traversant au moins successivement le compresseur C, le premier échangeur de chaleur 1, le premier détendeur D1, le deuxième échangeur de chaleur 2 formant alors un évaporateur, la première vanne V1 et l'accumulateur A avant de traverser à nouveau le compresseur C.

Dans ce mode de fonctionnement, le détendeur D1 applique une perte de charge. Dans ce mode de fonctionnement également, le second radiateur R2 est rendu inopérant par fermeture de la vanne V4. Le fluide caloporteur circule donc uniquement au travers du premier radiateur R1.

Dans le troisième mode de fonctionnement, également appelé mode de climatisation de l'habitacle, des calories peuvent être prélevées sur le flux d'air destiné à l'habitacle (refroidissement ou climatisation de l'air destiné à l'habitacle) à l'aide du deuxième échangeur de chaleur 2, lesdites calories étant transférées au fluide caloporteur par l'intermédiaire du premier échangeur de chaleur 1. Ces calories sont ensuite évacuées dans l'air extérieur, par l'intermédiaire du premier radiateur R1.

Comme précédemment, le cycle thermodynamique correspondant au troisième mode de fonctionnement est illustré sur le diagramme de Mollier de la figure 9. Sur ce diagramme, des points référencés i1 à i5 ont été reportés à la fois sur le diagramme de Mollier et sur le circuit de fluide frigorigène illustré à la figure 8 afin de faciliter la compréhension.

## Revendications

1. Dispositif de conditionnement thermique d'un espace, comportant un circuit de fluide caloporteur et un circuit de fluide frigorigène qui comprend un premier échangeur de chaleur (1) formant un condenseur, un deuxième échangeur de chaleur (2) formant un condenseur ou un évaporateur, un troisième échangeur de chaleur (3) formant un évaporateur, un compresseur (C), un premier détendeur (D1), un second détendeur (D2) et des moyens (V1, V2, AR) de redirection du flux de fluide frigorigène configurés pour faire circuler le fluide frigorigène selon un premier mode de fonctionnement dans lequel le fluide frigorigène circule selon une première boucle traversant au moins successivement le compresseur (C), le premier échangeur de chaleur (1), le deuxième échangeur de chaleur (2) formant alors un condenseur, le deuxième détendeur (D2), et le troisième échangeur de chaleur (3) avant de traverser à nouveau le compresseur (C),
le premier échangeur de chaleur (1) étant configuré pour échanger de la chaleur entre le fluide frigorigène et le fluide caloporteur du circuit de fluide caloporteur,
ledit circuit de fluide caloporteur comportant un premier radiateur (R1) configurer pour échanger de la chaleur entre ledit fluide caloporteur et de l'air extérieur audit espace et un second radiateur (R2) apte à échanger de la chaleur entre ledit fluide caloporteur et un flux d'air destiné à déboucher dans ledit espace,
le circuit de fluide caloporteur comportant en outre des moyens (V3, V4) de redirection du fluide caloporteur configurés pour diriger le fluide caloporteur vers le premier radiateur (R1) et/ou vers le second radiateur (R2), **caractérisé en ce que** le deuxième échangeur de chaleur (2) étant configuré à échanger de la chaleur entre le fluide frigorigène et le flux d'air destiné à déboucher dans ledit espace, le troisième échangeur de chaleur (3) étant configuré à échanger de la chaleur entre le fluide frigorigène et de l'air extérieur audit espace,
le premier mode de fonctionnement étant un mode de chauffage de l'habitacle, des calories étant prélevées sur l'air extérieur, à l'aide du troisième échangeur de chaleur (3), lesdites calories étant transférées ensuite au flux d'air destiné à l'habitacle, à la fois directement par le deuxième échangeur de chaleur (2) et indirectement à l'aide du premier échangeur de chaleur (1), du fluide caloporteur et du second radiateur (R2).

2. Dispositif selon la revendication 1, **caractérisé en ce que**, dans le premier mode de fonctionnement, le fluide frigorigène issu du premier échangeur de chaleur (1) traverse le premier détendeur (D1) avant de traverser le deuxième échangeur de chaleur (2).

3. Dispositif selon la revendication 1 ou 2, **caractérisé en ce que** le fluide frigorigène est apte à circuler selon :
- un deuxième mode de fonctionnement dans lequel le fluide frigorigène circule selon une deuxième boucle traversant au moins successivement le compresseur (C), le premier échangeur de chaleur (1), le premier détendeur (D1), le deuxième échangeur de chaleur (2) formant alors un évaporateur et le troisième échangeur de chaleur (3) avant de traverser à nouveau le compresseur (C), et/ou
- un troisième mode de fonctionnement dans lequel le fluide frigorigène circule selon une première boucle traversant au moins successivement le compresseur (C), le premier échangeur de chaleur (1), le premier détendeur (D1), et le deuxième échangeur de chaleur (2) formant alors un évaporateur avant de traverser à nouveau le compresseur (C).

4. Dispositif selon la revendication 3, **caractérisé en ce que**, dans le deuxième mode de fonctionnement, le fluide frigorigène issu du deuxième échangeur de chaleur (2) traverse le deuxième détendeur (D2) avant de traverser le troisième échangeur de chaleur (3).

5. Dispositif selon l'une des revendications 1 à 4, **caractérisé en ce qu'**il comporte un accumulateur (A) situé en amont du compresseur (C).

6. Dispositif selon l'une des revendications 1 à 5, **caractérisé en ce que** les moyens de redirection du flux de fluide frigorigène comportent un clapet anti-retour (AR) situé en aval du troisième échangeur de chaleur (3).

7. Dispositif selon l'une des revendications 1 à 6, **caractérisé en ce qu'**il comporte :
- une première portion (P1) formant une boucle s'étendant de la sortie du compresseur (C) à l'entrée du compresseur (C) et comportant successivement le premier échangeur de chaleur (1), le premier détendeur (D1), le deuxième échangeur de chaleur (2), un premier embranchement (E1) et un second embranchement (E2),
- une seconde portion (P2) s'étendant du premier embranchement (E1) au second embranchement (E2) et comportant successivement, du premier embranchement (E1) vers le second embranchement (E2), le second détendeur (D2) et le troisième échangeur de chaleur (3),
- les moyens (V1, V2) de redirection du flux de fluide frigorigène étant aptes à autoriser le passage de fluide frigorigène dans la première portion (P1), entre les premier et second embranchements (E1, E2), tout en interdisant le passage de fluide frigorigène dans la seconde portion (P2), ou aptes à autoriser le passage de fluide frigorigène dans la seconde portion (P2) tout en interdisant le passage de fluide frigorigène dans la première portion (P1), entre les premier et second embranchements (E1, E2).

8. Dispositif selon la revendication 7, **caractérisé en ce que** la première portion (P1) comporte une première vanne d'arrêt (V1) située entre les premier et second embranchements (E1, E2), la seconde portion (P2) comportant une seconde vanne d'arrêt (V2) située entre le premier embranchement et le deuxième détendeur (D2), la première vanne d'arrêt (V1) et la seconde vanne d'arrêt (V2) appartenant aux moyens de redirection du flux de fluide frigorigène.

9. Dispositif selon la revendication 7 ou 8, **caractérisé en ce que** la seconde portion (P2) comporte un clapet anti-retour (AR) situé entre le troisième échangeur de chaleur (3) et le deuxième embranchement (E2), le clapet anti-retour (AR) appartenant aux moyens de redirection du flux de fluide frigorigène.

10. Dispositif selon l'une des revendications 1 à 9, **caractérisé en ce que** le premier détendeur (D1) et/ou le second détendeur (D2) ont une ouverture ou une perte de charge variable, l'ouverture et/ou la perte de charge du premier détendeur (D1) et/ou du second détendeur (D2) étant commandées.

11. Dispositif selon l'une quelconque des revendications précédentes et la revendication 7, **caractérisé en ce que** les moyens de redirection (V3, V4) du circuit de fluide caloporteur sont conçus pour diriger le fluide caloporteur vers le premier radiateur (R1) dans le premier mode de fonctionnement et pour diriger le fluide caloporteur vers le second radiateur (R2) dans le deuxième mode de fonctionnement et dans le troisième mode de fonctionnement.

12. Véhicule automobile comportant un dispositif de conditionnement thermique selon l'une des revendications 1 à 11, ledit espace étant un habitacle du véhicule automobile.

## Patentansprüche

1. Vorrichtung zur thermischen Konditionierung eines Raums, die einen Wärmeträgerkreislauf und einen Kältemittelkreislauf aufweist, der einen einen Kondensator bildenden ersten Wärmetauscher (1), einen einen Kondensator oder einen Verdampfer bildenden zweiten Wärmetauscher (2), einen einen Verdampfer bildenden dritten Wärmetauscher (3), einen Kompressor (C), ein erstes Expansionsventil (D1), ein zweites Expansionsventil (D2) und Einrichtungen (V1, V2, AR) zum Umleiten des Kältemittelflusses enthält, die konfiguriert sind, das Kältemittel gemäß einer ersten Betriebsart zirkulieren zu lassen, bei der das Kältemittel gemäß einer ersten Schleife zirkuliert, die mindestens nacheinander den Kompressor (C), den ersten Wärmetauscher (1), den zweiten Wärmetauscher (2), der dann einen Kondensator bildet, das zweite Expansionsventil (D2) und den dritten Wärmetauscher (3) durchquert, ehe sie den Kompressor (C) erneut durchquert, wobei der erste Wärmetauscher (1) konfiguriert ist, Wärme zwischen dem Kältemittel und dem Wärmeträger des Wärmeträgerkreislaufs auszutauschen,
wobei der Wärmeträgerkreislauf einen ersten Radiator (R1), der konfiguriert ist, Wärme zwischen dem Wärmeträger und der Luft außerhalb des Raums auszutauschen, und einen zweiten Radiator (R2) aufweist, der Wärme zwischen dem Wärmeträger und einem Luftstrom austauschen kann, der dazu bestimmt ist, in den Raum zu münden,
wobei der Wärmeträgerkreislauf außerdem Einrichtungen (V3, V4) zur Umleitung des Wärmeträgers aufweist, die konfiguriert sind, den Wärmeträger zum ersten Radiator (R1) und/oder zum zweiten Radiator (R2) zu leiten,
**dadurch gekennzeichnet, dass** der zweite Wärmetauscher (2) konfiguriert ist, zwischen dem Kältemittel und dem Luftstrom, der dazu bestimmt ist, in den Raum zu münden, Wärme auszutauschen, wobei der dritte Wärmetauscher (3) konfiguriert ist, zwischen dem Kältemittel und Luft außerhalb des Raums Wärme auszutauschen,
wobei die erste Betriebsart eine Heizart des Innenraums ist, wobei mit Hilfe des dritten Wärmetauschers (3) Kalorien aus der Außenluft entnommen werden, wobei die Kalorien anschließend an den für den Innenraum bestimmten Luftstrom übertragen werden, sowohl direkt durch den zweiten Wärmetauscher (2) als auch indirekt mit Hilfe des ersten Wärmetauschers (1), des Wärmeträgers und des zweiten Radiators (R2).

2. Vorrichtung nach Anspruch 1, **dadurch gekennzeichnet, dass** in der ersten Betriebsart das vom ersten Wärmetauscher (1) stammende Kältemittel das erste Expansionsventil (D1) durchquert, ehe es den zweiten Wärmetauscher (2) durchquert.

3. Vorrichtung nach Anspruch 1 oder 2, **dadurch gekennzeichnet, dass** das Kältemittel zirkulieren kann gemäß:
- einer zweiten Betriebsart, bei der das Kältemittel gemäß einer zweiten Schleife zirkuliert, die mindestens nacheinander den Kompressor (C), den ersten Wärmetauscher (1), das erste Expansionsventil (D1), den zweiten Wärmetauscher (2), der dann einen Verdampfer bildet, und den dritten Wärmetauscher (3) durchquert, ehe sie erneut den Kompressor (C) durchquert, und/oder
- einer dritten Betriebsart, bei der das Kältemittel gemäß einer ersten Schleife zirkuliert, die mindestens nacheinander den Kompressor (C), den ersten Wärmetauscher (1), das erste Expansionsventil (D1) und den zweiten Wärmetauscher (2) durchquert, der dann einen Verdampfer bildet, ehe sie erneut den Kompressor (C) durchquert.

4. Vorrichtung nach Anspruch 3, **dadurch gekennzeichnet, dass** in der zweiten Betriebsart das vom zweiten Wärmetauscher (2) stammende Kältemittel das zweite Expansionsventil (D2) durchquert, ehe es den dritten Wärmetauscher (3) durchquert.

5. Vorrichtung nach einem der Ansprüche 1 bis 4, **dadurch gekennzeichnet, dass** sie einen Akkumulator (A) aufweist, der sich stromaufwärts vor dem Kompressor (C) befindet.

6. Vorrichtung nach einem der Ansprüche 1 bis 5, **dadurch gekennzeichnet, dass** die Umleitungseinrichtungen des Kältemittelflusses ein Rückschlagventil (AR) aufweisen, das sich stromabwärts hinter dem dritten Wärmetauscher (3) befindet.

7. Vorrichtung nach einem der Ansprüche 1 bis 6, **dadurch gekennzeichnet, dass** sie aufweist:
- einen ersten eine Schleife bildenden Abschnitt (P1), der sich vom Ausgang des Kompressors (C) zum Eingang des Kompressors (C) erstreckt und nacheinander den ersten Wärmetauscher (1), das erste Expansionsventil (D1), den zweiten Wärmetauscher (2), eine erste Abzweigung (E1) und eine zweite Abzweigung (E2) aufweist,
- einen zweiten Abschnitt (P2), der sich von der ersten Abzweigung (E1) zur zweiten Abzweigung (E2) erstreckt und nacheinander von der ersten Abzweigung (E1) zur zweiten Abzweigung (E2) das zweite Expansionsventil (D2) und den dritten Wärmetauscher (3) aufweist,
- wobei die Einrichtungen (V1, V2) zur Umleitung des Kältemittelflusses den Übergang von Kältemittel in den ersten Abschnitt (P1) zwischen der ersten und der zweiten Abzweigung (E1, E2) zulassen und gleichzeitig den Übergang von Kältemittel in den zweiten Abschnitt (P2) verhindern können, oder den Übergang von Kältemittel in den zweiten Abschnitt (P2) zulassen und gleichzeitig den Übergang von Kältemittel in den ersten Abschnitt (P1) zwischen der ersten und der zweiten Abzweigung (E1, E2) verhindern können.

8. Vorrichtung nach Anspruch 7, **dadurch gekennzeichnet, dass** der erste Abschnitt (P1) einen ersten Absperrschieber (V1) aufweist, der sich zwischen der ersten und der zweiten Abzweigung (E1, E2) befindet, wobei der zweite Abschnitt (P2) einen zweiten Absperrschieber (V2) aufweist, der sich zwischen der ersten Abzweigung und dem zweiten Expansionsventil (D2) befindet, wobei der erste Absperrschieber (V1) und der zweite Absperrschieber (V2) zu den Umleitungseinrichtungen des Kältemittelflusses gehören.

9. Vorrichtung nach Anspruch 7 oder 8, **dadurch gekennzeichnet, dass** der zweite Abschnitt (P2) ein Rückschlagventil (AR) aufweist, das sich zwischen dem dritten Wärmetauscher (3) und der zweiten Abzweigung (E2) befindet, wobei das Rückschlagventil (AR) zu den Umleitungseinrichtungen des Kältemittelflusses gehört.

10. Vorrichtung nach einem der Ansprüche 1 bis 9, **dadurch gekennzeichnet, dass** das erste Expansionsventil (D1) und/oder das zweite Expansionsventil (D2) eine variable Öffnung oder Druckverlust haben, wobei die Öffnung und/oder der Druckverlust des ersten Expansionsventils (D1) und/oder des zweiten Expansionsventil (D2) gesteuert werden.

11. Vorrichtung nach einem der vorhergehenden Ansprüche und Anspruch 7, **dadurch gekennzeichnet, dass** die Umleitungseinrichtungen (V3, V4) des Wärmeträgerkreislaufs konzipiert sind, um den Wärmeträger in der ersten Betriebsart zum ersten Radiator (R1) zu leiten, und um den Wärmeträger in der zweiten Betriebsart und in der dritten Betriebsart zum zweiten Radiator (R2) zu leiten.

12. Kraftfahrzeug, das eine Vorrichtung zur thermischen Konditionierung nach einem der Ansprüche 1 bis 11 aufweist, wobei der Raum ein Innenraum des Kraftfahrzeugs ist.

## Claims

1. Device for thermally conditioning a space, comprising a heat-transfer fluid circuit and a refrigerant circuit which comprises a first heat exchanger (1) forming a condenser, a second heat exchanger (2) forming a condenser or an evaporator, a third heat exchanger (3) forming an evaporator, a compressor (C), a first expansion device (D1), a second expansion device (D2) and redirection means (V1, V2, AR) for redirecting the flow of refrigerant, these being configured to cause the refrigerant to circulate in a first mode of operation in which the refrigerant circulates around a first loop passing at least in succession through the compressor (C), the first heat exchanger (1), the second heat exchanger (2) therefore forming a condenser, the second expansion device (D2) and the third heat exchanger (3) before passing through the compressor (C) again,
the first heat exchanger (1) being configured to exchange heat between the refrigerant and the heat-transfer fluid of the heat-transfer fluid circuit,
the said heat-transfer fluid circuit comprising a first radiator (R1) configured to exchange heat between the said heat-transfer fluid and air external to the said space and a second radiator (R2) able to exchange heat between the said heat-transfer fluid and an air flow intended to emerge into the said space,
the heat-transfer fluid circuit further comprising means (V3, V4) for redirecting the heat-transfer fluid, these being configured to direct the heat-transfer fluid towards the first radiator (R1) and/or towards the second radiator (R2), **characterized in that**
the second heat exchanger (2) being configured to exchange heat between the refrigerant and the air flow intended to emerge into the said space, the third heat exchanger (3) being configured to exchange heat between the refrigerant and air external to the said space,
the first mode of operation being a vehicle-interior heating mode, heat energy being taken from the external air, using the third heat exchanger (3), the said heat energy then being transferred to the air flow intended for the vehicle interior, both directly via the second heat exchanger (2) and indirectly by the first heat exchanger (1), the heat-transfer fluid and the second radiator (R2).

2. Device according to Claim 1, **characterized in that**, in the first mode of operation, the refrigerant coming from the first heat exchanger (1) passes through the first expansion device (D1) before passing through the second heat exchanger (2).

3. Device according to Claim 1 or 2, **characterized in that** the refrigerant is able to circulate in:
- a second mode of operation in which the refrigerant circulates around a second loop passing at least in succession through the compressor (C), the first heat exchanger (1), the first expansion device (D1), the second heat exchanger (2) therefore forming an evaporator and the third heat exchanger (3) before passing through the compressor (C) again and/or
- a third mode of operation in which the refrigerant circulates around a first loop passing at least in succession through the compressor (C), the first heat exchanger (1), the first expansion device (D1) and the second heat exchanger (2) therefore forming an evaporator, before passing through the compressor (C) again.

4. Device according to Claim 3, **characterized in that**, in the second mode of operation, the refrigerant coming from the second heat exchanger (2) passes through the second expansion device (D2) before passing through the third heat exchanger (3).

5. Device according to one of Claims 1 to 4, **characterized in that** it comprises an accumulator (A) situated upstream of the compressor (C).

6. Device according to one of Claims 1 to 5, **characterized in that** the means for redirecting the flow of refrigerant comprise a non-return valve (AR) situated downstream of the third heat exchanger (3).

7. Device according to one of Claims 1 to 6, **characterized in that** it comprises:
- a first portion (P1) forming a loop extending from the outlet of the compressor (C) to the inlet of the compressor (C) and comprising in succession the first heat exchanger (1), the first expansion device (D1), the second heat exchanger (2), a first junction (E1) and a second junction (E2),
- a second portion (P2) extending from the first junction (E1) to the second junction (E2) and comprising in succession, from the first junction (E1) towards the second junction (E2), the second expansion device (D2) and the third heat exchanger (3),
- the means (V1, V2) for redirecting the flow of refrigerant being able to allow the refrigerant to pass in the first portion (P1), between the first and second junctions (E1, E2) while preventing the refrigerant from passing into the second portion (P2), or able to allow the refrigerant to pass into the second portion (P2) while at the same time preventing the refrigerant from passing into the first portion (P1), between the first and second junctions (E1, E2).

8. Device according to Claim 7, **characterized in that** the first portion (P1) comprises a first shutoff valve (V1) situated between the first and second junctions (E1, E2), the second portion (P2) comprising a second shutoff valve (V2) situated between the first junction and the second expansion device (D2), the first shutoff valve (V1) and the second shutoff valve (V2) belonging to the means for redirecting the flow of refrigerant.

9. Device according to Claim 7 or 8, **characterized in that** the second portion (P2) comprises a non-return valve (AR) situated between the third heat exchanger (3) and the second junction (E2), the non-return valve (AR) belonging to the means for redirecting the flow of refrigerant.

10. Device according to one of Claims 1 to 9, **characterized in that** the first expansion device (D1) and/or the second expansion device (D2) have a variable opening or variable pressure drop, the opening and/or pressure drop of the first expansion device (D1) and/or of the second expansion device (D2) being controlled.

11. Device according to any one of the preceding claims and Claim 7, **characterized in that** the redirection means (V3, V4) of the heat-transfer fluid circuit are designed to direct the heat-transfer fluid toward the first radiator (R1) in the first mode of operation and to direct the heat-transfer fluid toward the second radiator (R2) in the second mode of operation and in the third mode of operation.

12. Automotive vehicle comprising a thermal conditioning device according to one of Claims 1 to 11, the said space being an automotive vehicle interior.
